# EUROPÄISCHE PATENTSCHRIFT

(11) **EP 0 402 608 B1**
(45) Veröffentlichungstag und Bekanntmachung des Hinweises auf die Patenterteilung: **02.11.1994**
(21) Anmeldenummer: 90108418.6
(22) Anmeldetag: 04.05.1990
(51) Int. Cl.: H01H 13/02

(54) **Elektrischer Schalter**
Electrical switch
Interrupteur électrique

(30) Priorität: 12.06.1989 CH 2186/89
(43) Veröffentlichungstag der Anmeldung: 19.12.1990
(73) Patentinhaber: Elektro-Apparatebau Olten AG, 4600 Olten (CH)
(72) Erfinder: Portmann, Hansjörg, CH-4563 Gerlafingen (CH); Torma, Mikael, CH-4600 Olten (CH)
(74) Vertreter: Fillinger, Peter, Dr.

(56) Entgegenhaltungen:
- EP-A- 0 160 206
- EP-A- 0 184 186
- WO-A-85/02938
- GB-A- 2 202 678
- US-A- 4 678 879

## Beschreibung

Die vorliegende Erfindung bezieht sich auf einen elektrischen Schalter gemäss dem Oberbegriff des Anspruchs 1.

Schalter dieser Art sind aus der GB-A-2202678 und der WO-88/02938 bekannt. Bei diesen Schaltern ist das Schaltelement rückseitig am Schaltergehäuse befestigt. Sind solche Schalter in eine Schalttafel einzubauen, die aus einer Frontplatte und einer dahinter liegenden, parallelen Leiterplatte besteht, muss zuerst die Frontplatte mit den Schaltern bestückt und danach auf die Leiterplatte gesteckt werden. Als nächstes sind die zwischen Front- und Leiterplatte befindlichen Distanzhalter zu verschrauben, und erst danach können die Anschlusskontakte verlötet werden. Dieser Montageaufwand ist gross und unterscheidet sich nicht vom Aufwand, der sich bei der Verwendung von Schaltern nach Art der US-A-4678879 oder der EP-A-184 186 ergibt.

Die vorliegende Erfindung stellt sich daher die Aufgabe, einen Schalter der eingangs genannten Art derart zu verbessern, dass der Montageaufwand beim Bau von Schalttafeln bestehend aus einer Frontplatte und einer parallel beabstandeten Leiterplatte wesentlich verkleinert werden kann.

Erfindungsgemäss wird diese Aufgabe gelöst durch die kennzeichnenden Merkmale des Anspruchs 1.

Dank der Erfindung können Frontplatte und Leiterplatte zeitlich parallel gefertigt werden. Danach können die beiden Platten aufeinander gelegt und die Schaltergehäuserückseite mittels Schrauben an der Leiterplatte festgeschraubt werden. Bei diesem Vorgehen entfallen auch die bisher üblichen Distanzhalter zwischen den Platten und der Aufwand für deren Montage. Dabei wird zudem eine grössere Genauigkeit erreicht, da beim bekannten Montagevorgehen die Länge der Distanzhalter und jene der Schaltergehäuse selten übereinstimmt.

Anhand der beiliegenden schematischen Zeichnung wird die Erfindung beispielsweise erläutert. Es zeigen:
- Fig. 1: eine perspektivische Ansicht eines Schalters, wobei ein Sektor des Schaltergehäuses weggebrochen ist,
- Fig. 2: einen Schnitt längs der Linie II-II in Fig. 1 und
- Fig. 3: eine perspektivische Explosionsdarstellung des Schaltergehäuses.

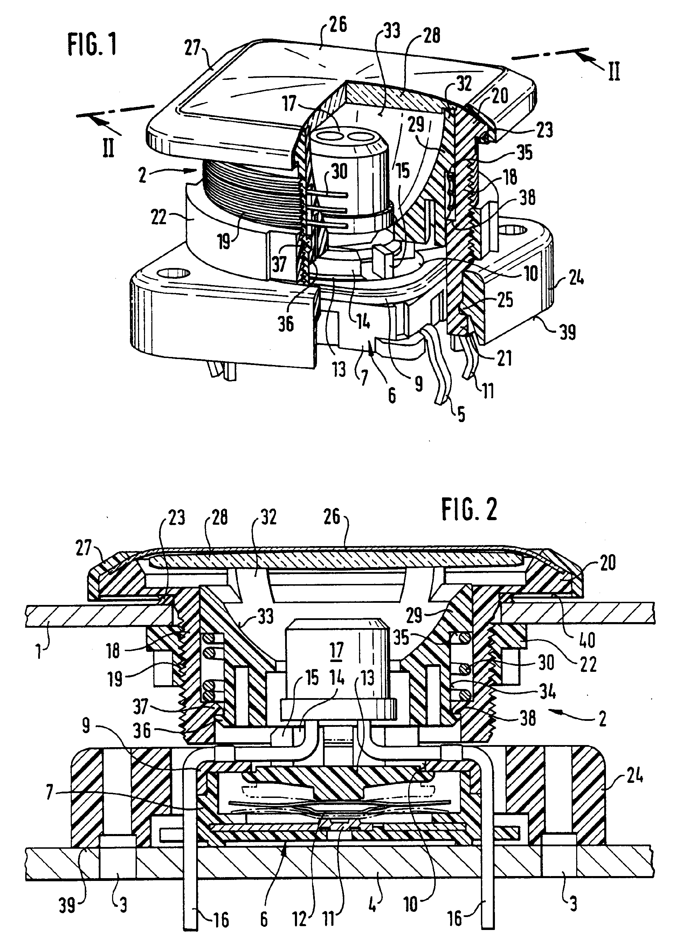

Die Fig. 2 zeigt im Schnitt einen fest in eine Frontplatte 1 eingesetzten Schalter gemäss Fig. 1. Am Schaltergehäuse 2 ist rückseitig eine Leiterplatte 4 festgeschraubt (3). Der Schalter dient dem Unterbrechen oder Verbinden der Kontakte 5, 11, welche auf der Leiterplatte 4 mit den entsprechenden Leiterbahnen verbunden sind.

Das Schaltergehäuse 2 umschliesst ein die Schaltkontakte enthaltendes Schaltelement 6. Dieses weist im wesentlichen ein in der Draufsicht quadratisches Gehäuse 7 auf, das nach unten durch einen Boden 8 abgeschlossen ist. Auf dem Gehäuse 7 ist ein Rahmen 9 befestigt, der nach oben eine Öffnung 10 frei lässt. Im Boden 8 befinden sich die Schaltkontakte 5 und 11, die mit zwei Leiterbahnen der Leiterplatte 4 verbunden sind. Ebenfalls mit dem Boden 8 fest verbunden ist eine Federmembrane 12, die zwischen einer Ruhelage (mit ausgezogenen Strichen gezeichnet) und einer Arbeitslage (strichpunktiert gezeichnet) verformbar ist, in welch letzterer sie den Schaltkontakt 11 berührt und diesen leitend mit einer oder beiden der Leiterbahnen verbindet oder unterbricht. Die Verformung der Federmembrane 12 erfolgt mittels einer aufliegenden tellerförmigen Platte 13, die durch die elastische Rückstellkraft der Federmembrane 12 in Anlage mit dem Rahmen 9 gehalten ist. Nach oben wird die Platte 13 von einem ringrippenartigen Vorsprung 14 überragt, der mit radialen Durchbrechungen 15 für das Hindurchführen der Leiter 16 eines Beleuchtungskörpers 17 versehen ist. Der Beleuchtungskörper 17 wird mit seinen Leitern 16 durch die Öffnungen im Boden 8 gestossen und mit den Leitern auf der Leiterplatte 4 verbunden.

Das beschriebene Schaltelement ist eine selbständige Baueinheit, die bei der Bestückung von Leiterplatten 4 an den gewünschten Schaltstellen aufgesteckt und verbunden wird. Durch Druck auf den Vorsprung 14 wird die Platte 13 nach unten bewegt und drückt mit einer zentralen, nach unten gerichteten Nase den Mittelsteg der Federmembrane 12 nach unten und über einen Totpunkt. Nach dem Überschreiten des Totpunktes springt der Mittelsteg gegen den Schaltkontakt 12. Wird der Vorsprung 14 entlastet, entspannt sich die Federmembrane 12 und kehrt in die Ruhelage zurück. Dabei verschiebt sie die Platte 13 wieder nach oben und hält sie in Anlage mit dem Rahmen 9. Auf diese Weise können bestückte Printplatten vor dem Anbringen einer Frontplatte 1 auf ihre Funktionsfähigkeit geprüft werden.

Das den Betätigungsmechanismus für das Schaltelement 6 enthaltende Schaltergehäuse 2 weist im wesentlichen einen zylindrischen Mantel 18 mit einem Aussengewinde 19, einen frontseitigen Spannrahmen 20 und rückseitige Rastfederbeine 21 auf. Die Spannrahmenrückseite 40 bildet eine Anschlagfläche gegen die Montagewand 1. Mittels einer auf das Aussengewinde 19 aufschraubbaren Ringmutter 22 ist das Schaltergehäuse 2 gegebenenfalls unter Zwischenlage eines Dichtringes 23 an der Frontplatte 1 befestigbar. Zum Schaltergehäuse 2 gehört weiter ein Flansch 24, der nach dem Befestigen des Mantels 18 an der Frontplatte 1 über die Rastfederbeine 21 geschoben wird, bis diese mit entsprechenden Rastnocken 25 verrasten. Über den Spannrahmen 20 ist eine elastisch verformbare Folie 26 gespannt und entlang ihrer Ränder durch Schweissen oder Kleben daran befestigt.

Nach dem Anbringen der Folie werden deren Ränder durch einen Blendrahmen 27 abgedeckt, der auf den Spannrahmen 20 aufgesteckt ist. Der Blendrahmen 27 ist auswechselbar und kann entsprechend den Abnehmerwünschen in Form und Farbe verschieden gestaltet sein.

Der bewegliche Betätigungsmechanismus für das Schaltelement 6 besteht aus der elastischen Folie 26 sowie aus einer Diffusorplatte 28 und einem im Mantel 18 achsial verschiebbaren Reflektor 29, der von einer Rückstellfeder 30 beaufschlagt ist.

Die lichtdurchlässige Diffursorplatte 28 kann in einer gewünschten Farbe getönt sein. An ihren vier Seiten ist sie je mit einer Ausnehmung 31 versehen, mit denen sie auf vier vom Reflektor 29 nach oben ragende Stifte 32 aufsteckbar ist. Es ist indessen auch möglich, die Diffusorplatte 28 lose auf den Reflektor 29 aufzulegen.

Der Reflektor 29 ist innenseitig mit einer nach oben orientierten Reflektionsfläche 33 versehen, die den Beleuchtungskörper 17 umgibt. Aussen ist er durch eine zylindrische Oberfläche 34 begrenzt, die im Bereich des frontseitigen Endes eine Ringschulter 35 bildet und am anderen Ende mit zwei gegenüberliegenden Rastnasen 36 versehen ist. Diese wirken mit entsprechenden Vorsprüngen 37 an der Innenseite des Mantels 18 zusammen und halten den in den Mantel 18 gesteckten Reflektor 29 unverlierbar im Schaltergehäuse 2 fest. Zwischen einer Ringschulter 38 auf der Mantelinnenseite und der Ringschulter 35 des Reflektors 29 ist die auf Druck vorgespannte Rückstellfeder 30 angeordnet. Diese hat die Neigung, den Reflektor 29 nach oben zu drücken und die Rastnasen 36 in Anschlag mit den Vorsprüngen 37 zu halten. In dieser Stellung drückt der Reflektor 29 die Diffusorplatte 28 gegen die Folie 26 und hält sie, sofern sie nur lose auf den Reflektor 29 aufgelegt ist, unverrückbar fest.

Ist der Mantel 18 mit seinen beweglichen Teilen 26, 28, 29 in einer Montageplatte 1 durch Festziehen der Ringmutter 22 befestigt, wird der Flansch 24 auf den Mantel 18 aufgesteckt, und zwar so, dass die Rastfederbeine 21 mit den Rastnocken 25 verrasten. Beim derart montierten Schaltergehäuse 2 bildet die Flanschrückseite eine ebene Anschlag- bzw. Montagefläche 39 für die Leiterplatte 4. Der Abstand der Montagefläche 39 zur Montagewand 1 ist bei allen Schaltern gleich und gewährleistet eine vollständig parallele Ausrichtung von Montagewand 1 und Leiterplatte 4, wenn sie mehrere Schalter enthalten. In die Montagefläche 39 öffnet sich die vom Schaltergehäuse gebildete Aufnahmekammer für das Schaltelement 6, die im wesentlichen seitlich durch den Flansch 24 begrenzt ist. Beim Zusammenbau einer Schalttafel wird die bestückte Leiterplatte 4 gegen die Montagefläche 39 gelegt, so dass die Schaltelemente vollständig in das zugehörige Schaltergehäuse 2 eintauchen. Danach wird die Leiterplatte 4 mit selbstschneidenden Schrauben am Flansch 24 festgeschraubt.

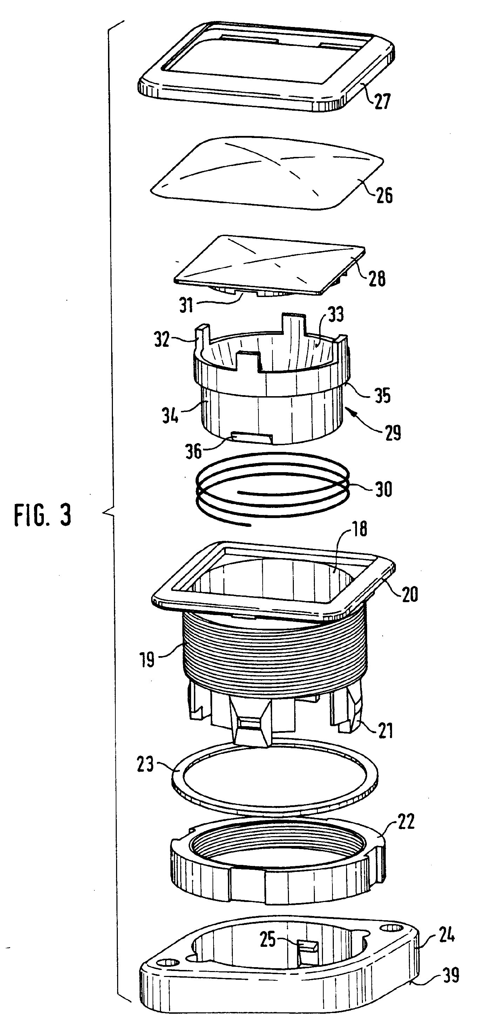

Es ist auch möglich, die Länge der Rastfederbeine 21 so zu wählen, dass sie nach dem Verrasten des Flansches 24 mit dem Mantel 18 geringfügig und gleichmässig über die als Montagefläche 39 bezeichnete Flanschrückseite vorstehen. In diesem Fall bilden die Rastfederbeine 21 eine Montagefläche 39′ (Fig. 3) an der die Printplatte 4 zur Anlage kommt, wenn sie mittels der Schrauben 3 am Flansch 24 festgeschraubt ist.

Ist die Leiterplatte 4 am Flansch 24 befestigt, bleibt die Distanz zwischen der Montagewand 1 und der Printplatte 4 immer gleich. Drückt man nun von oben auf die Folie 26, schieben sich der Reflektor 29 und die Platte 13 nach unten und verformen die Federmembrane 12 bis sie umspringt und die Kontakte 5, 11 schliesst.

Die Verwendung des Schaltergehäuses 2 als Distanzhaltelement zwischen der Montagewand 1 und der Leiterplatte 4 und die damit erreichte Parallelstellung dieser Platten bewirkt, dass bei allen Schaltern in einer Montageplatte die Vorsprünge 14 mit dem gleichen Abstand zum zugehörigen Reflektor 29 in Anlage gebracht werden können und dass demzufolge bei allen Schaltern der Schaltweg gleich gross ist.

## Patentansprüche

1. Elektrischer Schalter mit einem Schaltergehäuse (2), in dem die die Betätigungsbewegung auf ein Schaltelement (6) übertragenden Organe (26, 28, 29) gelagert sind, wobei am frontseitigen Ende eine gegenüber einer Frontplatte (1) wirksame Anschlagfläche (40) vorhanden ist, die mittels einem Spannelement (22) mit der Frontplatte in Anschlag bringbar ist, dadurch gekennzeichnet, dass das Schaltergehäuse (2) eine selbständige, getrennt auf die Frontplatte (1) montierbare Baueinheit ist, die auf ihrer Rückseite offen ist und eine Aufnahmekammer bildet, in welche das eine selbständige Baueinheit bildende und getrennt mit den gewünschten Schaltstellen verbindbare Schaltelement (6) einschiebbar ist und in eingeschobenem Zustand in Wirkverbindung mit den die Betätigungsbewegung übertragenden Organen (26, 28, 29) steht.

2. Schalter nach Anspruch 1, dadurch gekennzeichnet, dass das Schaltergehäuse (2) auf seiner Rückseite eine zur Anschlagfläche (40) parallele Montagefläche (39) bildet, und dass sich die Aufnahmekammer in die Montagefläche (39, 39′) öffnet.

3. Schalter nach Anspruch 2, dadurch gekennzeichnet, dass das Schaltergehäuse (2) in Richtung seiner Längsachse in einen vorderen und einen hinteren Teil (18 bzw. 24) unterteilt ist, welche Teile form- und/oder kraftschlüssig miteinander verbindbar sind.

4. Schalter nach Anspruch 3, dadurch gekennzeichnet, dass der hintere Teil (24) flanschartig gestaltet ist.

5. Schalter nach Anspruch 3, dadurch gekennzeichnet, dass der vordere Teil (18) durch einen am frontseitigen Ende angeordneten Spannrahmen (20) die Anschlagfläche (40) bildet und vom Spannrahmen (20) weg nach hinten zylindrisch sowie mit einem Aussengewinde (19) gestaltet ist, auf das eine Überwurfmutter (22) als Spannelement aufschraubbar ist.

6. Schalter nach Anspruch 4, dadurch gekennzeichnet, dass der hintere Teil (24) die Montagefläche (39) bildet und im wesentlichen die Aufnahmekammer für das Schaltelement (6) nach der Seite hin begrenzt.

7. Schalter nach Anspruch 4, dadurch gekennzeichnet, dass der vordere Teil (18) den flanschartigen hinteren Teil (24) mit einzelnen Abschnitten (21) durchdringt und hinter der Rückseite des hinteren Teils (24) eine Montagefläche (39′) bildet.

8. Schalter nach Anspruch 7, dadurch gekennzeichnet, dass die Abschnitte (21) form- und/oder kraftschlüssig wirkende Rastfederbeine sind, die entsprechend mit dem hinteren Teil (24) verrasten.

9. Schalter nach Anspruch 5, dadurch gekennzeichnet, dass der Spannrahmen (20) von einer Folie (26) überspannt ist, und dass die die Betätigungsbewegung übertragenden Organe (26, 28, 29) weiter einen von einer Rückstellfeder (30) beaufschlagten Reflektor (29) aufweisen, der eine lichtdurchlässige Platte (28) federnd in Anlage mit der Folie (26) hält.

10. Schalter nach Anspruch 9, dadurch gekennzeichnet, dass die Folienränder durch einen auswechselbaren, auf den Spannrahmen (20) aufsteckbaren Blendrahmen (27) abgedeckt sind.

11. Schalter nach einem der Ansprüche 1 bis 10 mit einem Beleuchtungskörper (17) für die Leuchtanzeige, dadurch gekennzeichnet, dass der Beleuchtungskörper (17) mit dem Schaltelement (6) auf einer Leiterplatte fest montierbar ist, und dass bei eingeschobenem Schaltelement (6) der Reflektor (29) den Beleuchtungskörper (17) mit einer Reflektionsfläche (33) umgibt.

## Claims

1. Electrical switch, with a switch housing (2) in which parts (26, 28, 29) transmitting the operating movement to a switching element (6) are mounted, there being provided at the front end an abutment surface (40) which is effective relatively to a front plate (1) and which is bringable by means of a tensioning element (22) into abutment with the front plate, characterised in that the switch housing (2) is an independent unit which is separately mountable on the front plate (1) and which is open at its rear side and forms an accommodation chamber into which the switching element (6), an independent unit and separately connectable to the desired switching locations, is insertable and which in the inserted state is in operative connection with the parts (26, 28, 29) transmitting the operating movement.

2. Switch according to claim 1, characterised in that the switch housing (2) at its rear side forms a mounting surface (39) parallel to the abutment surface (40), and that the accommodation chamber opens into the mounting surface (39, 39′).

3. Switch according to claim 2, characterised in that the switch housing (2) is subdivided in the direction of its longitudinal axis into a front part and a rear part (18 and 24 respectively), these parts being connectable to one another in shape-locking and/or force-locking manner.

4. Switch according to claim 3, characterised in that the rear part (24) is of flange-type construction.

5. Switch according to claim 3, characterised in that the front part (18) forms the abutment surface (40) by means of a tensioning frame (20) arranged at the front end and is formed away from the tensioning frame (20) towards the rear cylindrically and also with an external screwthread (19) on to which a sleeve nut (22) can be screwed as a tensioning element.

6. Switch according to claim 4, characterised in that the rear part (24) forms the mounting surface (39) and substantially laterally bounds the accommodation chamber for the switching element (6).

7. Switch according to claim 4, characterised in that the front part (18) extends through the flange-type rear part (24) with individual segments (21), and, behind the rear of the rear part (24), forms a mounting surface (39′).

8. Switch according to claim 7, characterised in that the segments are elastic latching legs which have a shape-locking and/or force-locking action, and which interlock correspondingly with the rear part (24).

9. Switch according to claim 5, characterised in that the tensioning frame (20) is spanned with a sheet element (26) and that the parts (26, 28, 29) transmitting the operating movement further comprise a reflector (29) which is acted upon by a return spring (30) and which holds a light-pervious plate (28) elastically in abutment with the sheet element (26).

10. Switch according to claim 9, characterised in that the sheet element edges are covered by an interchangeable blind frame (27) which can be fitted on to the tensioning frame (20).

11. Switch according to one of claims 1 to 10, with a lighting element (17) for the illuminated display, characterised in that the lighting element (17) is securely mountable with the switching element on a conductor plate, and that when the switching element (6) is pushed-in the reflector (29) surrounds the lighting element (17) with a reflection surface (33).

## Revendications

1. Interrupteur électrique avec un boîtier d'interrupteur (2) dans lequel sont logés les organes (26, 28, 29) transmettant le mouvement de commande à un élément de circuit (6) interrupteur dans lequel à l'extrémité du côté frontal existe une surface de butée (40) agissant vis-à-vis d'une plaque frontale (1) et qui au moyen d'un élément de serrage (22) peut être amenée en butée contre la plaque frontale, caractérisé en ce que le boîtier d'interrupteur (2) est une unité de construction autonome, pouvant être montée séparément sur la plaque frontale (1), qui est ouverte sur sa face arrière et constitue une alvéole d'insertion, dans laquelle peut être inséré l'élément de circuit (6) formant une unité de construction autonome et pouvant être lié séparément avec les plaques de connexion désirées et qui se trouve à l'état enfiché en liaison active avec les organes (26, 28, 29) transmettant le mouvement de commande.

2. Interrupteur selon la revendication 1, caractérisé en ce que le boîtier (2) forme sue sa face arrière une surface de montage parallèle à la surface de butée (40) et en ce que l'alvéole d'insertion s'ouvre sur la surface de montage (39, 39′).

3. Interrupteur selon la revendication 2, caractérisé en ce que le boîtier (2) est subdivisé dans le sens de son axe longitudinal en une partie avant et une partie arrière (18 ou 24), parties qui peuvent être reliées ensemble par engagement par la forme et/ou par la force.

4. Interrupteur selon la revendication 3, caractérisé en ce que la partie arrière (24) est formée à la façon d'une bride.

5. Interrupteur selon la revendication 3, caractérisé en ce que la partie avant (18) forme au moyen d'un cadre de serrage (20) disposé à l'extrémité du côté frontal, la surface de butée (40), elle se développe à partir du cadre de serrage (20) vers l'arrière sous une forme cylindrique et comporte aussi un filetage extérieur (19) sur lequel peut être vissé un écrou d'accouplement (22) comme élément de blocage.

6. Interrupteur selon la revendication 4, caractérisé en ce que la partie arrière (24) forme la surface de montage (39) et délimite essentiellement l'alvéole de réception destinée à l'élément de circuit (6) vers la face.

7. Interrupteur selon la revendication 4, caractérisé en ce que la partie avant (18) traverse la partie arrière (24) en forme de bride par des segments séparés (21) et forme derrière la face arrière de la partie arrière (24) une surface de montage (29′).

8. Interrupteur selon la revendication 7, caractérisé en ce que les segments (21) sont des jambes de force d'arrêt flexibles agissant par engagement par la forme et/ou par la force.

9. Interrupteur selon la revendication 5, caractérisé en ce que le cadre de serrage (20) est recouvert d'une feuille en tension (26) et en ce que les organes (26, 28, 29) transmettant le mouvement de commande comportent en outre un réflecteur (29) sollicité par un ressort de rappel (30), qui maintient une plaque (28) perméable à la lumière de manière élastique en position avec la feuille (26).

10. Interrupteur selon la revendication 9, caractérisé en ce que les bords de la feuille sont recouverts par un faux cadre (27) interchangeable, emboîtable sur le cadre de serrage (20).

11. Interrupteur selon une des revendications 1 à 10 avec un appareil d'éclairage (17) pour les indications lumineuses, caractérisé en ce que l'appareil d'éclairage (17) peut être monté de manière fixe avec l'élément de circuit (6) sur une plaque conductrice et en ce que lorsque l'élément de circuit (6) est introduit le réflecteur entoure avec une surface de réflexion (33) l'appareil d'éclairage (17).
